# EUROPEAN PATENT SPECIFICATION

(11) **EP 2 945 790 B1**
(45) Date of publication and mention of the grant of the patent: **25.10.2017**
(21) Application number: 13702149.9
(22) Date of filing: 16.01.2013
(51) Int. Cl.: B29C 39/18, B29C 39/44, B29D 99/00, B01D 65/10, B29C 33/00, G01N 15/08, B29L 31/00

(54) **AN INTEGRATED APPARATUS AND METHOD FOR CONTINUOUS ION EXCHANGE MEMBRANE CASTING AND PROCESSING**
VORRICHTUNG UND VERFAHREN ZUR KONTINUIRLICHEN HERSTELLUNG UND BEHANDLUNG EINER IONENAUSTAUSCHMEMBRANE
DISPOSITIF ET PROCÉDÉ DE PRODUCTION ET TRAITEMENT EN CONTINU D'UNE MEMBRANE D'ÉCHANGE D'IONS

(43) Date of publication of application: 25.11.2015
(73) Proprietor: General Electric Company, Schenectady, NY 12345 (US)
(72) Inventor: RAMANAN, Harikrishnan, Singapore 117580 (SG); BARBER, John H., Guelph, Ontario N1H 1G2 (CA); PRATURI, Purnima, Singapore 117580 (SG); GOH, Li May, Singapore 117580 (SG)
(74) Representative: Foster, Christopher Michael
(86) International application number: PCT/US2013/021729
(87) International publication number: WO 2014/112993

(56) References cited:
- GB-A- 1 495 670
- US-A- 5 264 125
- US-A1- 2009 110 998

## Description

### BACKGROUND

US Patent Number 5,264,125, entitled Process for Manufacturing Continuous Supported Ion Selective Membranes Using Non-Polymerizable High Boiling Point Solvents, describes a process for making a supported ion exchange membrane. The process comprises forming a sandwich of a substrate and a pliable film on each face of the substrate. The films extend beyond the side edges of the substrate. The edges of the films are sealed together to form a pocket containing the substrate. Subsequently, the sandwich is pulled between a pair of squeeze rolls. A liquid is added to the pocket above the squeeze rolls to form a pool of the liquid above the squeeze rolls and between the films. The liquid wets the substrate and fills apertures in the substrate before the sandwich passes through the squeeze rolls. From the squeeze rolls, the sandwich passes through a set of means, for example heaters, for curing the liquid. Polymerizable components in the liquid are polymerized thereby forming a reinforced polymer sheet. The sandwich proceeds through a set of knives which remove the seals at the edges of the sandwich and through a pair of rollers which remove the films from the polymer sheet. The polymer sheet is then an ion exchange membrane.

US 2009/110998 describes a solid electrolyte membrane, a membrane electrode assembly and a fuel cell, along with a method and apparatus for producing the solid electrolyte membrane.

### SUMMARY

The invention is defined by the claims, to which reference should now be made. Examples of the invention are described in more detail below.

### BRIEF DESCRIPTION OF THE DRAWINGS

Figure 1 is a schematic diagram of an apparatus for manufacturing membranes.
Figure 1A is a diagram of an example of an apparatus according to Figure 1.
Figure 1B is a diagram of another example of an apparatus according to Figure 1.
Figure 2 is a schematic flow chart of a process for manufacturing membranes.
Figure 2A is a flow chart of an example of a process according to Figure 2.

### DETAILED DESCRIPTION

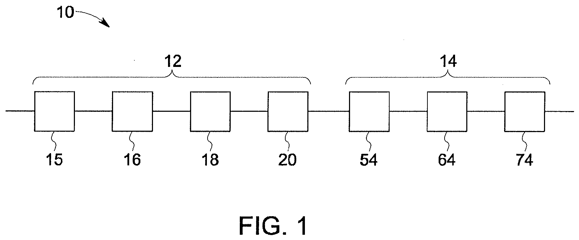

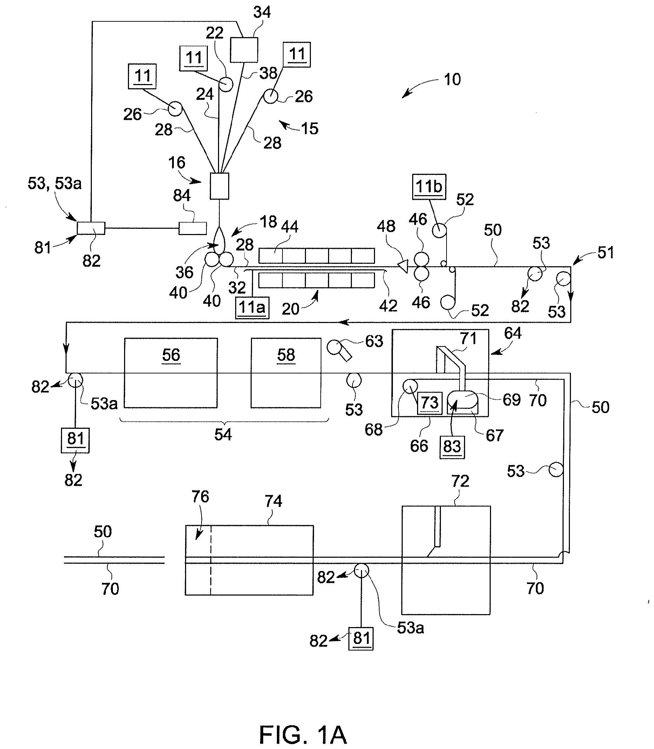

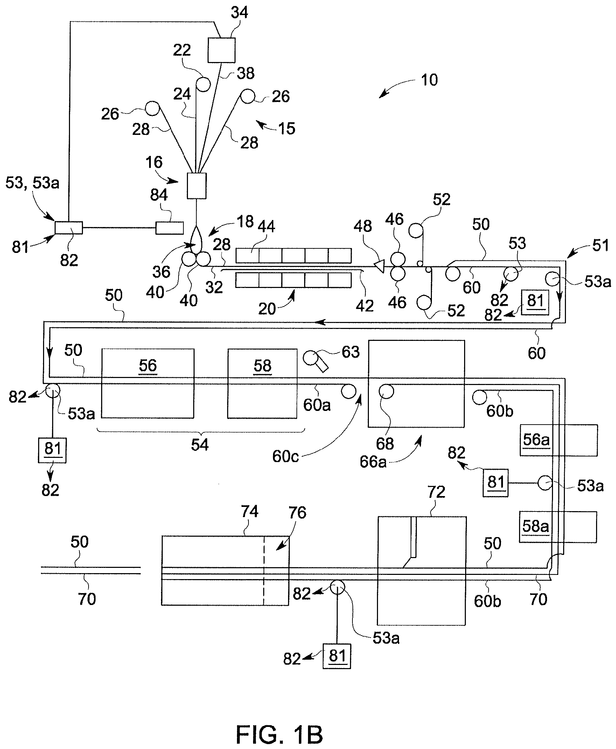

Figure 1 is a schematic diagram of an apparatus 10 for manufacturing membranes 50. While the apparatus 10 is suitable for the manufacture of various types of membranes 50, it is preferably used in the manufacture of ion exchange membranes. The apparatus comprises two primary sections: a casting section 12 and a processing section 14. The casting section 12 comprises a roll section 15, a film sealing section 16, a nip section 18 and a curing section 20. The casting section 12 is similar to the system described in U.S. Patent No. 5,264,125.

The processing section 14 comprises one or more of a conditioning section 54, a leak test section 64, a cutting section 74 and a conveyor system 51, which is shown in in Figure 1A.

In the example of Figure 1A, the roll section 15 includes a substrate feeder 22 that feeds a sheet of substrate 24 into the remainder of the apparatus 10. The substrate 24 is alternatively called a base material or a support layer and various suitable examples are commercially available. A substrate 24 is typically made up of one or more polymers, for example acrylic, polypropylene or polyester that can be extruded into yarns and woven into a fabric or combined into a non-woven fabric. Optionally, the substrate 24 can be provided on rolls in the substrate feeder 22.

The roll section 15 also includes two film feeders 26 that each feed a sheet of film 28 into parts of the remainder of the apparatus 10. The films 28 can be prepared from any type of material that is generally impermeable to volatile components and to a curable liquid and allows the membranes 50 to be separated from the films 28. For example, the films 28 may be made of thermoplastic polymer resins of the polyester family such as polyethylene terephthalate. The films 28 may be between 0,005 to 0,025 cm (0.002 inches to 0.010 inches) thick, or other sizes. Optionally, the films 28 can be provided on rolls in the film feeders 26.

The substrate feeder 22 and the film feeders 26 may be passive or the feeders 22, 26 may apply a resistance to unrolling. Alternatively, feeders 22, 26 are powered by one or more motors 11 to encourage unrolling and to provide a desired line speed and tension of the membrane 50 as it is conveyed through the apparatus 10. Optionally, other features that are described below contribute to maintaining the desired line speed and tension.

The film feeders 26 can provide a quantity of the same film 28. Optionally, each film feeder 26 may provide a different film 28.

The substrate feeder 22 and the film feeders 26 are arranged to feed the substrate 24 between the two films 28. The resulting arrangement of the substrate 24 and the films 28 travels through the apparatus 10 with a respective longitudinal centerline of the substrate 24 and the films 28 moving essentially in a single plane. The substrate 24 and the films 28 may be brought into a desired spacing or alignment relative to each other by passing over one or more devices, such as rollers, belt, guides or other suitable devices (not shown).

The substrate 24 and the films 28 pass from the roll section 15 to the film sealing section 16. The film sealing section 16 includes an edge sealing device (not shown) that seals the edges of the films 28 together. Preferably the films 28 are sealed beyond the edges of the substrate 24 that is located between the films 28. The edge sealing device provides an energy source, for example a heater or ultrasonic welder, to melt the edges of the films 28. The edge sealing device can also include a presser (not shown) for pressing the melted edges together. The pressing step may be performed after or during the step of melting the edges. Sealing the edges of the films 28 together forms a pocket film 28 with the substrate 24 located between the films 28. The pocket of film 28 may also be referred to as a substrate and film sandwich. The film pocket facilitates the substrate wetting process that occurs in the nip section 18, to be described below. However, in a modified or other wetting process, the film sealing section 16 may be omitted.

The nip section 18 includes a liquid feeder 34 that provides a curable liquid 36 into the film pocket and between the films 28 to wet the substrate 24. The wetted substrate 24 is also referred to as a membrane precursor 32. The liquid feeder 34 includes a reservoir (not shown) that contains the curable liquid 36 and one or more feeding tubes 38 that feed the curable liquid 36 from the reservoir to wet the substrate 24. The feeding tubes 38 extend from the liquid feeder 34, past the edge sealing device, and terminate above a pair of nip rollers 40. Although Figure 1A depicts the liquid feeder 34 as shown above the roll section 15, various other orientations are possible.

The curable liquid 36 can collect in a pool above the pair of nip rollers 40. The space between the nip rollers 40 is set to produce a membrane precursor 32 of a desired thickness. The feeding tubes 38 can temporarily provide an amount of the curable liquid 36 that exceeds the amount of curable liquid 36 that travels with the substrate 24 past the nip rollers 40. The excess curable liquid 36 pools above the nip rollers 40.

Any curable liquid used to cast a supported membrane between two films may be used. For example, the curable liquid 36 can be as described in U.S. 5,264,125. The curable liquid 36, the substrate 24 and the films 28 are selected to be compatible with each other. Optionally, other chemicals such as diluents and polymerization initiators may be part of the curable liquid 36 or added to the curable liquid 36 within the liquid feeder 34 or added into the pool of curable liquid 36 above the nip rollers 40. For example, the diluents and polymerization initiators may be as described in U.S. 5,264,125.

In one option of the apparatus 10, the height of the pool of excess curable liquid 36 above the nip rollers 40 can be controlled to adequately wet the substrate 24 to form the membrane precursor 32. For example, the height of the curable liquid 36 above the nip rollers 40 can be monitored by a sensor 84 that provides pool height information to a controller 82. The controller 82 preferably includes one or more programmable devices such as a processor or microprocessor, computer, Field Programmable Gate Array, or programmable logic controller (PLC). Alternatively or additionally, the controller 82 may comprise one or more non-programmable control elements, such as a timer or pneumatic or electric circuit, capable of implementing a sequence of operations.

The controller 82 compares the pool height information to a pre-set height value or range and determines any difference between the height information and the pre-set height value or range to generate a pool height error signal. Based upon the pool height error signal, the controller 82 can command the liquid feeder 34 to provide more or less curable liquid 36. For example, the pre-set height value or range can be between about 2 and about 15 cm. The pre-set height value or range can be selected to provide sufficient contact time between the substrate 24 and the curable liquid 36 to create the membrane precursor 32. Optionally, the liquid feeder 34 further includes a pumping system that delivers curable liquid 36 based upon commands received from a controller 82.

The membrane precursor 32 and the films 28 pass through the nip rollers 40 and then move to the curing section 20. The membrane precursor 32 and the films 28 can be supported on a continuous or segmented platform 42, which conveys the membrane precursor 32 and the films 28 through the curing section 20. Optionally, the platform 42 is moved by a motor 11a. One or more curing devices 44 produce conditions in the curing section 20 that support a polymerization reaction by which the curable liquid 36 forms a solid polymer. The polymerization reaction transforms the membrane precursor 32 into the membrane 50. For example, the curable liquid 36 may be cured by heat or by infrared, microwave, ultraviolet or other forms of radiation. In one embodiment, the membrane precursor 32 may be heated to a temperature of from about 40°C to about 200°C to initiate and maintain the polymerization reaction. The curing section 20 may be in the range of about 2 to about 20 meters long. The residence time in the curing section 20 may be in the range of about 4 to about 40 minutes. These temperatures and times may vary depending on the curable liquid 36 used and the polymerization reaction.

Upon leaving the curing section 20, the membrane 50 and the films 28 are conveyed through the processing section 14. The processing section 14 comprises one or more sections, such as a conditioning section 54, a leak test section 64 and, a cutting section 74, and the conveyor system 51. The conveyor system 51 includes a series of rollers 53 that convey the membrane through the sections of the processing section 14.

The processing section 14 includes a second pair of nip rollers 46 that receives the membrane 50 and the films 28 following the curing section 20. Optionally, a knife 48 is located before, or after, the second pair of nip rollers 46 for trimming the edges of the films 28. The processing section 14 also includes film rollers 52 that separate the films 28 from the membrane 50. The film rollers 52 peel the films 28 from the membrane 50 and roll them up. One or more of the film rollers 52 can be driven by one or more motors 11b to facilitate moving the membrane precursor 32, the membrane 50 and the films 28 through the casting section 12.

The processing section 14 includes a conditioning section 54 that treats the membrane 50 to reduce an amount of residues in the membrane 50. The residues are components of the membrane precursor 32 that do not participate, either partially or fully, in the polymerization reaction. The residues may also be referred to as polymerization reaction residues. The residues can be distributed evenly, or unevenly, throughout the membrane 50. The residues may comprise monomers, oligomers, polymers, solvents, unreacted reactants, polymerization initiators, catalysts or a combination thereof. The residues may also comprise various ions, chemicals or combinations thereof. For example, the residues may include various ion species such as sulfonate ions, chloride ions, iodide ions, bromide ions, lithium ions, lithium hydroxide ions, sodium ions, hydrogen ions or a combination thereof. The residues may also include various chemicals, including dipropyleneglycol (DPG), propyleneglycol, glycol derivatives, alcohols such as n-propanol, iso-propanol, n-butanol, iso-butanol, alcohol derivatives, ethers and ether derivatives, esters and ester derivatives, N-methyl pyrrolidone (NMP), amines and amine derivatives, amides and amide derivatives, sulfonic group derivatives, tertiary ammonium group derivatives or a combination thereof.

The conditioning section 54 includes one or more conditioning tanks. Conditioning tanks can also be referred to as extraction tanks or washing tanks. Each conditioning tank can be filled with water, or an aqueous solution or a solvent or some other liquid. When a conditioning tank is filled with water, the water is preferably substantially de-ionized, for example with a conductivity of 50 microS/cm or less. However, water with higher conductivity may still be considered to compose a water tank. A non-water tank may also contain mostly water, but the water is mixed with another compound to modify its reaction with the membrane.

The conditioning section 54 may consist of only one non-water tank, more than one non-water tank, one or more non-water tanks positioned before or after a water tank, only one water tank, more than one water tank, one or more water tanks positioned before or after a non-water tank or other combinations of one or more conditioning tanks. In one example, a conditioning tank containing water, preferably with a conductivity of 50 microS/cm or less, is used alone or as the first tank in a series of conditioning tanks. In the example of Figure 1A, the conditioning section 54 includes two conditioning tanks, an extraction tank 56 and a washing tank 58. The extraction tank 56 can hold extraction fluids. Extraction fluids decrease the amount of residues within the membrane 50 as it is conveyed through the extraction tank 56 by the conveyor system 51. The extraction fluids may comprise organic ionic solutions, inorganic ionic solutions, organic non-ionic solutions, inorganic non-ionic solutions, substantially pure organic solvents, substantially pure inorganic solvents, organic solutions with additives, inorganic solutions with additives or a combination thereof. For example, the extraction tank 56 may contain a sodium chloride solution, a bicarbonate solution, a citric acid solution, a lactic acid solution, an acetic acid solution, a hydroxide solution, a solution containing one or more surfactants or a combination thereof.

The pH of the extraction solutions can vary with its intended purpose. For example, if it is desired to reduce any basic residues, the pH of the extraction solutions can be maintained in a range of about 2 to 4. This acidic pH range can be achieved and maintained by the addition of citric acid, acetic acid or other suitable acid solutions. If it desired to reduce any acidic residues, the pH of the extraction solutions can be maintained in a range of 9 to 13, for example, by the addition of bicarbonate.

The extraction tank 56 can be of a variety of shapes and dimensions. The conveyor system 51 conveys the membrane 50 through the extraction tank 56 either partially or fully submerged in the extraction fluids. The conveyor system 51 can convey the membrane 50 through the extraction tank 56 vertically, horizontally, on an inclined path or on a declined path, or a combination thereof. Further, the conveyor system 51 can make one or more passes through the extraction tank 56.

The wash tank 58, preferably downstream from the extraction tank 56. The wash tank 58 contains water to wash the extraction fluids and at least some of the residues from the membrane 50. The water may replace any extracted residues within the membrane 50 and wet the membrane 50. Various types of water are suitable, including filtered water, distilled water, double distilled water, de-ionized water with conductivity of less than about 50 microS/cm, reverse osmosis permeate water and the like. Optionally, the water may be recycled through one or more steps of washing and water with a higher conductivity may be used. The water can be maintained at a pH range of about 5 to 8 with a preferred pH of about 7. Optionally, the pH of the water can be maintained at a higher or lower pH depending upon the pH of the extraction fluids in the extraction tank 56.

The conveyor system 51 conveys the membrane 50 from the conditioning section 54 to the leak test section 64. The leak test section 64 includes a dye applicator 66 and a contrast feeder 68. The dye applicator 66 can automatically apply a dye to an upper surface of the membrane 50. The dye applicator 66 can include a dye reservoir 67, a pumping system 69 and a distribution pipe 71. The distribution pipe 71 has one or more nozzles. The pumping system 69 draws dye from the dye reservoir 67 and distributes dye through the one or more nozzles onto the upper surface of the membrane 50 as it is conveyed past the distribution pipe 71. Optionally, the a leak test controller 83 can control the pumping system 69 to control the amount of dye distributed through the nozzles based upon on the speed at which the membrane 50 is conveyed past the distribution pipe 71. Optionally, one or more spreaders (not shown) may be provided downstream of the distribution pipe 71 to spread the dye evenly across the upper surface of the membrane 50. For example, the spreaders may be brushes, rubber or metal blades, sponges, or the like. As shown in the example of Figure 1B, the leak test section includes a station 66a for housing an operator that can manually apply and evenly spread dye on the surface of the membrane 50.

The dye can be a permanganate based dye, such as dark violet dye; a methylene blue based dye; a chromate based dye, such as a red/orange dye; Erythrosin B dye or another other suitable dye that is compatible with the membrane 50. The dye can be made into a solution in a range of about 1% to about 30% weight of the dye to a volume of water (wt/v). Preferably, the dye is made into a solution of about 5% wt/v.

When the dye is applied to the membrane 50, the dye can enter the upper surface of the membrane 50, pass through any physical flaws in the body of the membrane 50 and exit through a lower surface of the membrane 50. The physical flaws in the membrane 50 can be spaces, gaps, holes or the like within the membrane 50 that are caused by imperfect polymerization reaction conditions, the presence of contaminants within the curable liquid 36 or various other reasons. The physical flaws in the membrane 50 can be localized phenomena or widespread throughout the membrane 50.

The contrast feeder 68 feeds a sheet of contrast material 70 into the remainder of the apparatus 10. The contrast feeder 68 can be positioned before, within or after the dye applicator 66. For example, the contrast material 70 is provided on rolls in the contrast feeder 68. In particular, the contrast feeder 68 feeds the contrast material 70 from below the membrane 50 upwards between the rollers 53 of the conveyor system 51. The sheet of contrast material 70 contacts the lower surface of the membrane 50. Any dye that passes through physical flaws in the membrane 50 will exit the membrane 50 and mark the contrast material 70 at or close to where the dye exited the membrane 50. The contrast material 70 can be made of one of various materials that provide a high visual contrast with the dye. The dye can mark the contrast material 70 in a manner that will not be significantly reduced or removed by the remainder of the processing section 14. For example, the contrast material 70 can be cloth, paper cloth, cellulose-fiber based cloth, or polypropylene and the dye may clearly mark the contrast material 70 and provide a visual indication of any portions of the membrane 50 that contain physical flaws.

The conveyor system 51 conveys the membrane 50 and the contrast material 70 from the leak test section 64 to the cutting section 74. The cutting section 74 has one or more blades to cut the membrane 50, and optionally the contrast material 70, into various desired sizes for storage and transport. The cutting section 74 includes an inspection station 76 positioned either before or after the membrane 50 is cut. Within the inspection station 76, an operator can identify any dye marked portions of the contrast material 70 that indicate regions of the membrane 50 with physical flaws. Optionally, the cutting section 74 can be automated based upon a count algorithm and the line speed of the conveyor system 51 to produce a final membrane 50 of a desired size. Alternatively, the cutting section 74 can be manually operated.

The conveyor system 51 conveys the membrane 50 through the processing section 14 by the rollers 53. While the examples of Figures 1A and 1B depict the conveyor system 51 as having multiple turns, this is provided for ease of depiction. For example, the conveyor system 51 could include one or more or no turns. The conveyor system 51 can be configured to meet the physical footprint requirements of the location where the apparatus 10 is installed and operating. Preferably, the conveyor system 51 conveys the membrane 50 as a continuous structure that extends along a path of travel from the curing section 20 through to the cutting section 74. However, other configurations are possible.

The rollers 53 are located at various points throughout the processing section 14 and support the membrane 50. The rollers 53 define the path of travel through the processing section 14. Preferably, the membrane 50 is conveyed in a central position, with respect to a width of the rollers 53, along the path of travel. One or more devices, such as rollers, belts or guides (not shown) can maintain membrane 50 in the central position along the path of travel.

One or more of the rollers 53a can be actively rotated by a motor 81. Alternatively, none of the rollers 53 are actively rotated by the motor 81 and the movement of the membrane 50 through the processing section 14 is dependent upon other features of the apparatus 10. Preferably, at least some of the rollers 53a are actively rotated by the motor 81. Actively driven rollers 53a convey the membrane 50 at the desired line speed and the desired tension through the processing section 14. The rollers 53 that are not actively rotated by the motor 81 may be passively rotated by the membrane 50 moving along the path of travel.

The motor 81 can be a series of motors that individually drive each roller 53a. Optionally, the rollers 53a can be connected by a belt drive (not shown) that is driven by one or more motors 81. As a further option, rollers 53, 53a can be organized into localized sections with the rollers 53a of each localized section connected by a belt drive that is driven by one or more motors 81. For example, one localized roller section can convey the membrane 50 from the end of the curing section 20 through the conditioning section 54. A second localized roller section can convey the membrane 50 from the conditioning section 54 through the leak text device 64 and a third localized roller section can convey the membrane 50 through the remainder of the processing section 14. The conveyor system 51 can include any number of localized roller sections.

The motor 81 can be a servo motor, stepper motor or any other motor that can be pre-programmed or that will respond to commands from a conveyor or controller 82. When there are multiple motors 81, the multiple motors 81 can rotate all of the rollers 53a, or all of the drive belts that rotate the rollers 53a, at the same desired rate. The rate of rotation determines the line speed of the membrane 50 along the path of travel and through the processing section 14. Preferably, the rollers 53a rotate at the same rate to provide a consistent line speed. The line speed regulates the residence time of the membrane 50 through the conditioning section 54 and the line speed can dictate the overall production rate of the apparatus 10. Maintaining a consistent line speed also regulates the tension of the membrane 50 throughout the processing section 14. Preferably, the tension of the membrane 50 keeps the membrane 50 flat to prevent pooling of the extraction fluids and water on the upper surface of the membrane 50, which can interfere with evenly applying the dye during the leak testing. However, in a modified apparatus 10, different tensions may be used through the processing section 14 and other sections of the apparatus 10.

In one option of the conveyor system 51, the motor 81 includes a tachometer that provides rotary velocity information to the controller 82. The controller 82 compares the rotary velocity information with a pre-set rotary velocity value and generates an error signal. The pre-set rotary velocity corresponds with the desired line speed. The error signal is the difference between the actual rotary velocity and the pre-set rotary velocity value. The controller 82 mathematically transforms the error signal into a velocity adjustment signal, which is sent to the motor 81. Upon receiving the velocity adjustment signal, the motor 81 adjusts its rotary velocity. The tachometer can be one of various rotary velocity sensors or angular position sensors, for example digital sensors, contact-based sensors, magnetic-based sensors and the like.

As a further option of the conveyor system 51, one or more of the rollers 53, 53a include roller velocity sensors. The roller velocity sensors provide roller velocity information to the controller 82. The controller 82 compares the roller velocity information with a pre-set roller velocity value and generates a roller velocity error signal. The pre-set roller velocity may also correspond with the desired line speed. The error signal is the difference between the actual roller velocity and the pre-set roller velocity value. The roller velocity error signal is mathematically transformed and added to the velocity adjustment signal, which is sent to the motor 81 and the motor 81 adjusts its rotary velocity. The roller velocity sensors can be one of various rotary velocity sensors and angular position sensors, for example digital sensors, contact-based sensors, magnetic-based sensors or the like.

In the example of Figures 1A and 1B, the apparatus 10 allows for a continuous production and processing of a membrane 50. For example, up until being cut in the cutting section 74, the membrane 50 can be continuous with the membrane precursor 32, which is continuous with the substrate 24 as it is fed into the apparatus 10. The substrate 24 can be of sufficient tensile strength so that as the conveyor system 51 conveys the membrane 50 through the processing section 14, the upstream portions of the substrate 24, including the membrane precursor 32, can be pulled through the casting section 12 at the desired line speed. Optionally, the motors 11, 11a and 11b can be similar to the motor 81. For example, the motors 11, 11a and 11b can be programmed to run at a rotational velocity that matches the desired line speed of the conveyor system 51. Alternatively, the controller 82 can regulate the rotational velocity of the motors 11, 11a and 11b to match the desired line speed of the conveyor system 51. Optionally, the speed at which the roll section 15 forms the film pocket, the speed at which the film sealing section 16 seals the film pocket, the speed at which the nip section 18 wets the substrate 24 to form the membrane precursor 32 and the speed at which the curing section 20 cures the membrane precursor 32 into a membrane 50 can all be substantially the same speed. The speed at which the casting section 12 casts the membrane 50 can be substantially the same speed as the speed the conveyor system 51 conveys the membrane 50 through the processing section 14.

As shown in the example of Figure 1B, the conveyor system 51 can further comprise a platform 60 that rests on the rollers 53, 53a and supports the membrane 50 throughout the processing section 14. The platform 60 can be segmented or continuous. The rollers 53a move the membrane 50 across the platform 60 at the desired line speed. Preferably, the platform 60 has a first section 60a and a second section 60b. The first and second sections 60a, 60b are separated by a gap 60c that allows the contrast material 70 to be fed between the lower surface of the membrane 50 and the upper surface of the platform 60. Optionally, the platform 60 can be continuous with the platform 42 of the curing section 20.

As shown in the example of Figure 1B, the apparatus 10 can be modular and permits various configurations of the processing section 14. For example, the processing section 14 can include one or more further extraction tanks 56a. The further extraction tanks 56a may be the same as the extraction tanks 56, or not. If the membrane 50 is made with a curable liquid 36 that produces a greater amount of residues, the further extraction tanks 56a can be provided to remove more residues. The further extraction tanks 56a can be positioned before or after the leak test section64 and before the cutting section 74. Optionally, the further extraction tanks 56a may be accompanied by further wash tanks 58a, or not. The further wash tanks 58a may be the same as the wash tanks 58, or not. As another option, the water can be cyclically recycled between wash tanks 58, 58a, for example in a cascade flow system.

When there is more than one extraction tank 56, 56a the extraction fluids can be the same or different between the extraction tanks 56, 56a. If the extraction fluids are the same, the concentration of the extraction fluids can be the same or different between the extraction tanks 56, 56a. When there is more than one wash tank 58, 58a, the water can be the same or not between the water tanks 58, 58a.

As shown in the example of Figures 1A and 1B, the processing section 14 can further include a dye removal device 72 that removes any excess dye from the upper surface of the membrane 50. The dye removal device 72 comprises one or more brushes, rubber or metal blades, sponges, wipers, a blower and combinations thereof that are positioned above or beside the path of travel.

In one option of the conditioning section 54, a blower 63 is positioned at the downstream end of the conditioning section 54. The blower 63 provides a pressurized stream of air, or other suitable inert gas, to remove any residual extraction fluids and water from the upper surface of the membrane 50.

In another option of the conditioning section 54, the extraction tank 56 and the wash tank 58 each comprise a pump and circulation loop (not shown). The pump and circulation loop agitates the fluids within the respective tanks. The pump and circulation loop also withdraws and replenishes the fluids to optimize their respective conditions, such as pH, and to remove any particulate matter and other contaminants or waste from the tanks 56, 58.

In another option of the conditioning section 54, the extraction tank 56 and the wash tank 58 include a cover. The cover prevents the loss of any sprayed fluids, gaseous fluids and volatiles from the tanks 56, 58. The cover also provides thermal insulation so that a temperature regulation system (not shown) can maintain a temperature of the fluids within a range of about 0ºC to about 85ºC. Preferably, the temperature in the tanks 56, 58 is maintained in a range of about 5 ºC to 70 ºC.

In one option of the leak test section 64, a motor 73 actively drives the contrast feeder 68 to feed the contrast material 70. The motor 73 can receive commands from the controller 82 to match the rate at which the contrast material 70 is introduced into the leak test section64 with the desired line speed of the membrane 50.

In one option of the conveyor system 51, the rollers 53, 53a are positioned within the extraction tank 56 and the membrane 50 makes more than one pass through the extraction fluids. For example, the rollers 53, 53a convey the membrane 50 through a series of switchbacks through the extraction tank 56. The multiple passes increase the length of the path of travel within the extraction tank 56, which increases the overall residence time within the extraction tank 56 without necessitating a larger sized extraction tank 56.

In another option of the conveyor system 51, one or more storage rollers (not shown) can be provided. For example, a storage roller may be positioned prior to the curing section 20 for collecting and storing the membrane precursor 32 and the films 28 by rolling them up. Optionally, another storage roller can collect and store the membrane 50, with or without the films 28, after the curing section 20. The storage rollers allow portions of the membrane precursor 32 and the membrane 50, as the case may be, to be moved from one location to another. For example, storage rollers can be used in a facility that does not have an adequate physical foot print to position all of the features of the apparatus 10 in close proximity to each other. The collected and stored membrane precursor 32 and membrane 50 can be introduced from the storage rollers onto a roller 53, 53a, or alternatively onto the platform 60, and then conveyed through the processing section 14.

In another option of the conveyor system 51, edge guide sensors (not shown) are positioned on both sides of the conveyor system 51 at various points along the path of travel. The edge guide sensors can detect if the membrane 50 shifts from the central position. When such a shift is detected, the edge guide sensors generate a misalignment signal that is sent to the controller 82. Upon receiving the misalignment signal, the controller 82 generates an alignment signal that is sent to one or more alignment members that are positioned along the path of travel. Upon receiving the alignment signal, the alignment members can adjust the position of the membrane 50 back to the central position. When the membrane 50 is back in the central position, the edge guide sensors stop generating the misalignment signal and the controller 82 stops generating the alignment signal. For example, the edge guide sensors can be optical sensors, touch sensors or the like. The alignment members can include guides, gates or adjustable rollers that can laterally alter the course of the membrane 50 as it is conveyed along the path of travel.

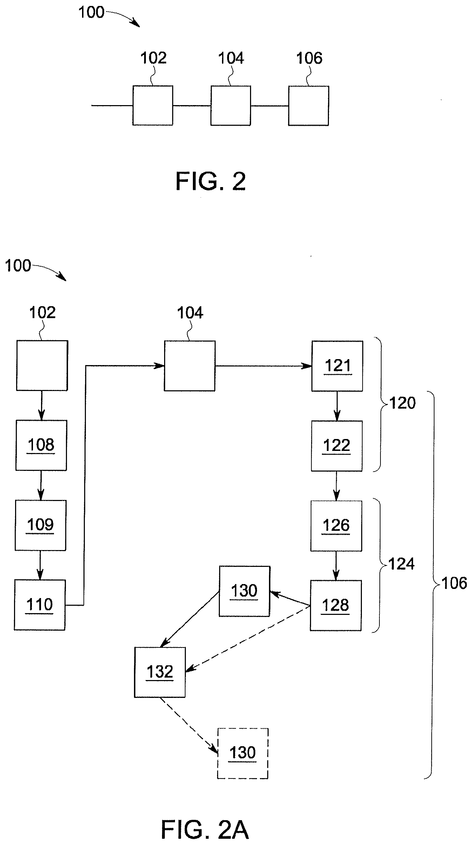

Figure 2 is a schematic flow chart of a method 100 for manufacturing membranes 50. The method 100 comprises the steps of casting a precursor 102, curing the precursor to form a cured membrane 104 and processing the cured membrane 106. The cured membrane is preferably conveyed through at least the processing step 106.

The step of casting a precursor 102 comprises a step of forming a film pocket 108, a step of sealing the pocket 109 and wetting 110 the substrate 24 within the film pocket. The pocket is formed 108 by layering the substrate 24 between two layers of film 28. When the pocket is formed 108, the step of sealing the pocket 109 includes melting at least a portion of the lateral edges of the film pocket and pressing the melted portions together to form a seal. The melting step may be achieved by various approaches, including heat, pressure, ultrasonic welding, chemical welding and combinations thereof. When the pocket is formed 108 and sealed 109, the curable liquid 36 is introduced into the pocket to wet 110 the substrate 24 and form the membrane precursor 32.

The step of curing the precursor to form a cured membrane 104 comprises a step of either heating or irradiating the membrane precursor 32, or both. The membrane precursor 32 can be irradiated with infrared, microwave, ultraviolet or other forms of radiation. During the curing step 104, the curable liquid 34 under goes a polymerizing reaction and the membrane precursor 32 changes into a cured form of the membrane 50.

The processing step 106 comprises the steps of separating the films 28 from the membrane 50 and conditioning 120 the membrane 50. The separated films 28 can be recycled or reused. Conditioning 120 the membrane 50 includes a step of extracting residues 121 from the membrane 50 by soaking or flushing the membrane 50 with extraction fluids. Optionally, the step of extracting residues 121 can also include a step of optimizing the conditions to increase the amount of residues that are extracted. For example, temperature, pH and the chemical composition of the extraction fluids can be optimized based upon the type of residues that are within the membrane 50. The conditioning step 120 can also include a step of washing 122 the extraction fluids from the membrane 50. Optionally, the steps of extracting 121 and washing 122 can be repeated, or prolonged, by conveying the membrane 50 multiple times through one extraction tank 56 and one wash tank 58. As a further option, the membrane 50 can be conveyed through one or more extraction tanks 56 and one or more wash tanks 58.

The processing step 106 further includes a step of testing 124 the membrane 50. The testing step 124 includes a step of applying 126 a dye to a surface of the membrane 50 and providing 128 a contrast material 70 to a surface of the membrane 50 that is opposite to the dyed surface. Dye that flows through any physical flaws in the membrane 50 will mark the contrast material 70. The dye marked contrast material 70 provides a visual cue that the membrane 50 contains physical flaws. Optionally, the testing step 124 can also include a step of removing excess dye from the dyed surface of the membrane 50. The testing step 124 further includes a step of inspecting 130 the contrast material 70 for dye marks. For example, an operator can inspect the contrast material 70 to identify flawed regions of the membrane 50 as regions where there are dye marks on the contrast material 70.

The processing step 106 further includes a step of cutting 132 the membrane 50 to a desired size. Optionally, the step of inspecting 130 can occur after the cutting 132 step (as indicated by the stippled arrows in Figure 2A).

The membrane 50 is conveyed between process step areas at a desired speed and a desired tension along a path of travel, for example upon the rollers 53, 53a or the platform 60. Preferably, the processing steps 106 adapted to be performed at a common line speed. For example, the line speed can be pre-set based upon the components of the curable liquid 36, or other factors, and stored in the controller 82. Further, various pre-set line speeds may be stored in the controller 82 for various different curable liquids 36 to optimize the time for the steps of extracting residues 121 and washing 122 the membrane 50. The user may input the type of curable liquid 36 into the controller 82. Based upon the input, the controller 82 selects the pre-set line speed and regulates the line speed of the conveyor system 51 to match the pre-set line speed. Optionally, the membrane 50 can be continuously conveyed at the desired line speed from the curing step 104 through all the processing steps 106. Preferably, the membrane 50 is continuous with the membrane precursor 32, which is continuous with the substrate 24, and the substrate 24, the membrane precursor 32 and the membrane 50 are continuously conveyed through all steps of the method 100.

## Claims

1. An apparatus (10) for manufacturing and processing a membrane (50), the apparatus comprising:
a. a membrane casting section (12) for producing a membrane;
b. a processing section (14) positioned after the membrane casting section, wherein the processing section comprises a conditioning section (54) and a leak test section (64), and
c. a conveyor system (51) configured to convey the membrane at least through the processing section.

2. The apparatus of claim 1, wherein the conveyor system is further configured to convey a membrane precursor (32) through the membrane casting section.

3. The apparatus of claim 1 or 2, wherein the conditioning section comprises an extraction tank (56) and a wash tank (58) both positioned before the leak test section.

4. The apparatus of claim 3, wherein the leak test section comprises a dye applicator (66) and a contrast feeder (68), wherein the dye applicator applies a dye to one surface of the membrane and wherein the contrast feeder feeds a contrast sheet adjacent another surface of the membrane.

5. The apparatus of claim 3 or 4, wherein the leak test section comprises a station (66a) for housing an operator to manually apply dye to one surface of the membrane and a contrast feeder (68), wherein the contrast feeder feeds a contrast sheet adjacent another surface of the membrane.

6. The apparatus of any of claims 3 to 5, further comprising a membrane cutting section (74) and an inspection station (76) positioned after the leak test section.

7. The apparatus of any of claims 3 to 5, wherein the conditioning section further comprises an air blower (63) positioned between the wash tank and the leak test section.

8. The apparatus of any of claims 3 to 5, wherein the extraction tank is covered.

9. The apparatus of any of claims 3 to 5, wherein the conveyor system is configured to convey the membrane through the extraction tank at least two times.

10. A method for manufacturing and processing a membrane (50) with the apparatus according to one of claims 1-9 comprising steps of:
a. casting a curable liquid onto a substrate to form a membrane precursor (32);
b. curing the membrane precursor to form a membrane; and
c. processing the membrane;
wherein step (c) comprises conveying the membrane through at least two processing areas.

11. The method of claim 10, further comprising conveying the membrane precursor from a processing area for step (b) to a processing area for step (c).

12. The method of claim 11, further comprising conveying the substrate through processing areas for step (a) to the processing area for step (b).

13. The method of any of claims 10 to 12, wherein the step (c) further comprises a step of extracting residues from the membrane and a step of washing the membrane.

14. The method of claim 13, wherein following the steps of extracting the residues from the membrane and washing the membrane, step (c) further comprises steps of applying a dye to a first surface of the membrane; feeding a contrast material adjacent a second surface of the membrane; identifying dye marked regions of the contrast material; and cutting the membrane.

## Patentansprüche

1. Vorrichtung (10) zum Herstellen und Verarbeiten einer Membran (50), wobei die Vorrichtung Folgendes umfasst:
a. einen Membrangießabschnitt (12) zum Erzeugen einer Membran;
b. einen Verarbeitungsabschnitt (14), der nach dem Membrangießabschnitt positioniert ist,
wobei der Verarbeitungsabschnitt einen Konditionierungsabschnitt (54) und einen Lecktestabschnitt (64) umfasst, und
c. ein Fördersystem (51), das zum Befördern der Membran mindestens durch den Verarbeitungsabschnitt konfiguriert ist.

2. Vorrichtung nach Anspruch 1, wobei das Fördersystem ferner zum Befördern eines Membranvorläufers (32) durch den Membrangießabschnitt konfiguriert ist.

3. Vorrichtung nach Anspruch 1 oder 2, wobei der Konditionierungsabschnitt einen Entnahmetank (56) und einen Waschtank (58) aufweist, die beide vor dem Lecktestabschnitt positioniert sind.

4. Vorrichtung nach Anspruch 3, wobei der Lecktestabschnitt einen Farbstoffapplikator (66) und einen Kontrastzuführer (68) umfasst, wobei der Farbstoffapplikator einen Farbstoff auf eine Oberfläche der Membran aufträgt und wobei der Kontrastzuführer eine Kontrastfolie benachbart der anderen Oberfläche der Membran zuführt.

5. Vorrichtung nach Anspruch 3 oder 4, wobei der Lecktestabschnitt eine Station (66a) zum Unterbringen eines Bedieners zum manuellen Auftragen von Farbstoff auf eine Oberfläche der Membran und einen Kontrastzuführer (68) umfasst, wobei der Kontrastzuführer eine Kontrastfolie benachbart der anderen Oberfläche der Membran zuführt.

6. Vorrichtung nach einem der Ansprüche 3 bis 5, ferner umfassend einen Membranschneidabschnitt (74) und einen Prüfabschnitt (76), der auf dem Lecktestabschnitt positioniert ist.

7. Vorrichtung nach einem der Ansprüche 3 bis 5, wobei der Konditionierungsabschnitt ferner ein Luftgebläse (63) umfasst, das zwischen dem Waschtank und dem Lecktestabschnitt angeordnet ist.

8. Verfahren nach einem der Ansprüche 3 bis 5, wobei der Entnahmeabschnitt abgedeckt ist.

9. Vorrichtung nach einem der Ansprüche 3 bis 5, wobei das Fördersystem konfiguriert ist, um die Membran mindestens zwei Mal durch den Entnahmetank zu befördern.

10. Verfahren zur Herstellung und Verarbeitung einer Membran (50) mit der Vorrichtung nach einem der Ansprüche 1 bis 9, umfassend die folgenden Schritte:
a. Gießen einer härtbaren Flüssigkeit auf ein Substrat, um einen Membranvorläufer (32) zu bilden;
b. Aushärten des Membranvorläufers zum Bilden einer Membran; und
c. Verarbeiten der Membran;
wobei Schritt (c) das Befördern der Membran durch mindestens zwei Verarbeitungsbereiche umfasst.

11. Verfahren nach Anspruch 10, ferner umfassend das Befördern des Membranvorläufers von einem Verarbeitungsbereich für Schritt (b) zu einem Verarbeitungsbereich für Schritt (c).

12. Verfahren nach Anspruch 11, ferner umfassend das Befördern des Substrats durch die Verarbeitungsbereiche für Schritt (a) zu dem Verarbeitungsbereich für Schritt (b).

13. Verfahren nach einem der Ansprüche 10 bis 12, wobei der Schritt (c) ferner einen Schritt der Entnahme von Rückständen aus der Membran und einen Schritt des Waschens der Membran umfasst.

14. Verfahren nach Anspruch 13, wobei nach den Schritten des Entnehmens der Rückstände von der Membran und des Waschens der Membran Schritt (c) ferner die Schritte des Auftragens eines Farbstoffs auf eine erste Oberfläche der Membran; Zuführen eines Kontrastmaterials benachbart einer zweiten Oberfläche der Membran; Identifizieren von farbstoffmarkierten Bereichen des Kontrastmaterials; und Schneiden der Membran umfasst.

## Revendications

1. Appareil (10) destiné à fabriquer et traiter une membrane (50), l'appareil comprenant :
a. une section de moulage de membrane (12) pour produire une membrane ;
b. une section de traitement (14) positionnée après la section de moulage de membrane, la section de traitement comprenant une section de conditionnement (54) et une section de test de fuite (64) ; et
c. un système de transport (51) conçu pour transporter la membrane au moins au travers de la section de traitement.

2. Appareil selon la revendication 1, dans lequel le système de transport est, en outre, conçu pour transporter un précurseur de membrane (32) à travers la section de moulage de membrane.

3. Appareil selon la revendication 1 ou 2, dans lequel la section de conditionnement comprend un réservoir d'extraction (56) et un réservoir de lavage (58), tous les deux positionnés avant la section de test de fuite.

4. Appareil selon la revendication 3, dans lequel la section de test de fuite comprend un applicateur de colorant (66) et un système de contraste (68), où l'application de colorant applique un colorant à une surface de la membrane, et où le système de contraste fournit une feuille de contraste à côté d'une autre surface de la membrane.

5. Appareil selon la revendication 3 ou 4, dans lequel la section de test de fuite comprend une station (66a) conçue pour héberger un opérateur afin d'appliquer manuellement un colorant sur une surface de la membrane et un système de contraste (68), le système de contraste fournissant une feuille de contraste à côté d'une autre surface de la membrane.

6. Appareil selon l'une quelconque des revendications 3 à 5, comprenant en outre une section de découpe de membrane (74) et une station d'inspection (76) positionnées après la section de test de fuite.

7. Appareil selon l'une quelconque des revendications 3 à 5, dans lequel la section de conditionnement comprend en outre un ventilateur (63) positionné entre le réservoir de lavage et la section de test de fuite.

8. Appareil selon l'une quelconque des revendications 3 à 5, dans lequel le réservoir d'extraction est couvert.

9. Appareil selon l'une quelconque des revendications 3 à 5, dans lequel le système de transport est conçu pour transporter la membrane à travers le réservoir d'extraction au moins deux fois.

10. Procédé de fabrication et de traitement d'une membrane (50) avec l'appareil selon l'une des revendications 1 à 9, comprenant les étapes de :
a. coulée d'un liquide polymérisable sur un substrat pour former un précurseur de membrane (32) ;
b. polymérisation du précurseur de membrane pour former une membrane ; et
c. traitement de la membrane ;
où l'étape (c) comprend le transport de la membrane à travers au moins deux zones de traitement.

11. Procédé selon la revendication 10, comprenant en outre de transporter le précurseur de membrane depuis une zone de traitement pour l'étape (b) vers une zone de traitement pour l'étape (c).

12. Procédé selon la revendication 11, comprenant en outre de transporter le substrat à travers des zones de traitement pour l'étape (a) vers la zone de traitement pour l'étape (b).

13. Appareil selon l'une quelconque des revendications 10 à 12, dans lequel l'étape (c) comprend en outre une étape d'extraction de résidus de la membrane et une étape de lavage de la membrane.

14. Procédé selon la revendication 13, où après les étapes d'extraction des résidus de la membrane et de lavage de la membrane, l'étape (c) comprend en outre des étapes d'application d'un colorant à une première surface de la membrane, de fourniture d'un matériau de contraste à côté d'une deuxième surface de la membrane, d'identification de régions marquées par le colorant sur le matériau de contraste et de découpe de la membrane.
